# EUROPÄISCHE PATENTSCHRIFT

(11) **EP 0 692 400 B1**
(45) Veröffentlichungstag und Bekanntmachung des Hinweises auf die Patenterteilung: **14.04.1999**
(21) Anmeldenummer: 95110856.2
(22) Anmeldetag: 12.07.1995
(51) Int. Cl.: B60J 7/057

(54) **Elektrischer Positionierantrieb, insbesondere für Schiebedächer von Kraftfahrzeugen**
Electrical positioning motor drive for vehicles' sliding roofs
Entraînement électrique de positionnement particulièrement pour des toits ouvrant de véhicules

(30) Priorität: 13.07.1994 DE 4424633
(43) Veröffentlichungstag der Anmeldung: 17.01.1996
(73) Patentinhaber: ROBERT BOSCH GMBH, 70442 Stuttgart (DE)
(72) Erfinder: Bertolini, Thomas, Dr., D-77866 Rheinau (DE)

(56) Entgegenhaltungen:
- EP-A- 0 351 280
- DE-A- 3 527 906
- DE-U- 9 013 491
- GB-A- 2 083 955
- GB-A- 2 268 287
- PATENT ABSTRACTS OF JAPAN vol. 9, no. 213 (M-408) (1936) 30. August 1985 & JP-A-60 071 329 (NIPPON DENSO K.K) 23. April 1985
- VONDRACEK, P.; NEHLS, W.; SEIDLER, K.: "ELEKTRONIK, MULTIPLEXTECHNIK UND DIAGNOSEFÄHIGKEIT DES NEUEN BMW 850I"; ATZ - AUTOMOBILTECHNISCHE ZEITSCHRIFT; DE; 92 (1990) 9; SEITEN 470-481
- GANZ, T.; HAHN, F.; WATZLAWICK, R.: "DIE ELEKTRONIK IM SCHIEBEDACH ALS KOMFORTELEMENT"; ATZ - AUTOMOBILTECHNISCHE ZEITSCHRIFT; DE; 95 (1993) 11; SEITEN 592-596

## Beschreibung

### Stand der Technik

Die Erfindung geht aus von einem elektrischen Positionierantrieb, insbesondere für Schiebedächer von Kraftfahrzeugen oder dergleichen, der im Oberbegriff des Anspruchs 1 definierten Gattung.

Aus DE 35 27 906 A1 ist eine Schaltungsanordnung zur Positionierung eines mittels einer Verstelleinrichtung verstellbaren Gegenstandes bekannt, bei der ein elektrischer Gleichstrommotor entsprechend zugeführter Signale und festgestellter Position betätigt und gesteuert wird. Die Position des Motors wird dabei durch Auswertung periodischer Schwankungen des Motorstroms bzw. einer darauf basierenden Größe festgestellt. Eine zufriedenstellende Beherrschung von Endpositionen des Verstellweges ist damit nicht möglich, insbesondere bei zumindest zeitweiligem Ausbleiben der Versorgungsspannung, da dabei eingespeicherte Positionswerte verloren gehen.

Mit dem Oberbegriff vergleichbare Positionierungsantriebe sind aus der GB 2 268 287 A, sowie für Schiebedächer, aus der DE-Zeitschrift ATZ "Automobiltechnische Zeitschrift" 92 (1990) 9, Seiten 470-481 und ATZ 95 (1993) 11, Seiten 592-596 bekannt.

Bei den beiden derzeit von der Anmelderin realisierten Positionsantrieben für Schiebedächer von Kraftfahrzeugen werden zum Öffnen/Schließen und Heben/Senken entweder ein Betätigungsschalter mit zwei Schaltstellungen oder zwei Betätigungsschalter mit jeweils zwei Schaltstellungen verwendet. Bei beiden Konzepten werden zur Erkennung der Abschaltpositionen mechanische Nockenschalträder und Mikroschalter eingesetzt. Die dabei zum Einsatz kommende Mechanik ist aufwendig, bis zum gewissen Grad störanfällig und bedarf zur Justage eines hohen Aufwandes.

Bei dem einen prinzipiellen Betätigungskonzept für den Schiebedachantrieb werden zwei Taster mit je zwei Schaltstellungen für die Funktionen 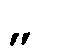 Heben/Senken" bzw. 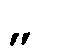 Öffnen/Schließen" verwendet. Dabei sind beide Schalter voneinander unabhängig. Zur Erfassung der Schiebedachposition werden ein Nockenschaltrad, das aus drei einzelnen Nockenscheiben besteht, sowie drei Mikroschalter verwendet. Die Codierung der Positionen ist kritisch, die Einstellung erfordert erheblichen Aufwand und die Nockenscheiben müssen sehr genau sein.

Bei dem zweiten prinzipiellen Betätigungskonzept für den Schiebedachantrieb mit nur einem Taster und zwei Schaltstellungen wirkt dieser Betätigungsschalter im gesamten Verstellbereich. Die Endstellungen werden hier mit zwei Mikroschaltern erfaßt, die über Schaltnocken des Nockenschaltrades betätigt werden. Bei Erreichen der Stellung 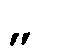 Geschlossen" erfolgt ein automatisches Abschalten des Schiebedachantriebes, indem ein Hubmagnet dann beide Mikroschalter blockiert. Um das Schiebedach weiter zu bewegen, wird der Taster losgelassen, wodurch der Hubmagnet wieder abschaltet und die Blockierung der Mikroschalter aufgehoben wird. Der Hubmagnet ist nicht geräuschlos und die Mechanik zum Blockieren der beiden Mikroschalter aufwendig und nicht störunanfällig.

Bei beiden Betätigungskonzepten hat sich bei der Verwendung von Mikroschaltern die mechanische Hysterese zwischen Einschalten und Ausschalten als nachteilig erwiesen. Darüber hinaus sind Kontaktprobleme nicht auszuschließen.

### Vorteile der Erfindung

Der erfindungsgemäße Positionierantrieb mit den Merkmalen des Anspruchs 1 hat demgegenüber den Vorteil, die Nachteile der beiden bisherigen Schiebedachantriebe zu vermeiden. Ganz generell werden bei dem allgemein anwendbaren neuen Antrieb die bisherigen mechanischen Komponenten ersetzt durch ein vom Motor angetriebenes Schaltrad, auf dem dauermagnetische Markierungen aufgebracht sind, durch Hallsensoren, die derart angeordnet sind, daß sie Signale entsprechend der dauermagnetischen Markierungen erzeugen, und durch eine Elektronik, welche die erzeugten Hallsensor-Signale zusammen mit den Betätigungssignalen in Motorsteuersignale umsetzt.

Dadurch, daß durch die Erfindung die aufwendige Einstellung der Mikroschalter, mit welcher die Toleranzen der Schalter selbst sowie die der mechanischen Teile ausgeglichen werden müssen, entfällt, entsteht ein erheblicher Kostenvorteil. Da weiterhin mechanische Schaltkontakte vermieden werden, wird die Funktionssicherheit erhöht.

Durch die in den weiteren Ansprüchen aufgeführten Maßnahmen sind vorteilhafte Weiterbildungen und Verbesserungen des im Anspruch 1 angegebenen Positionierantriebs möglich.

In vorteilhafter Weise ist gemäß einer zweckmäßigen Ausgestaltung der Erfindung jeder dauermagnetischen Markierung auf dem Schaltrad ein Hallsensor zugeordnet. In zweckmäßiger Ausgestaltung nehmen die dauermagnetischen Markierungen unterschiedliche Positionen auf dem Schaltrad ein. Besonders vorteilhaft ist es weiterhin, daß die dauermagnetischen Markierungen mit, in Richtung der Betätigung der Hallsensoren gesehen, unterschiedlichen Ausmaßen ausgestattet sind.

Gemäß einer weiteren vorteilhaften Ausgestaltung des erfindungsgemäßen Positionierantriebs sind zur Erhöhung der Funktionssicherheit die Hallsensoren von dem Feld der sie betätigenden dauermagnetischen Markierungen auf zwei Seiten eingeschlossen. Entsprechend einer besonderen Weiterbildung der Erfindung sind die dauermagnetischen Markierungen auf verschiedenen Radien des Schaltrades angeordnet.

In zweckmäßiger Ausgestaltung ist das Schaltrad als Sinterscheibe aus magnetisch leitendem Material ausgeführt. In der Scheibe sind auf verschiedenen Radien Nuten, vorzugsweise mit inneren Abstufungen, vorgesehen, in die dauermagnetisches Material eingebracht ist. Als dauermagnetisches Material können bevorzugt Plastoferritstreifen verwendet werden, die in einfacher Weise auf unterschiedliche Länge dauerhaft, z. B. durch Kleben, in den Nuten befestigt werden.

Gemäß einer vorteilhaften, alternativen Ausgestaltung kann das Schaltrad aus einem Ringmagneten bestehen und die dauermagnetischen Markierungen durch in radialer und sektoraler Ausdehnung verschieden große magnetisch leitende Teile, insbesondere mittels Stanzen gefertigte Blechteile, die einseitig oder bevorzugt beidseitig des Ringmagneten angebracht sind. Die zugeordneten Hallsensoren sind außerhalb des vom Ringmagneten eingenommenen Radius angeordnet.

Der erfindungsgemäße Positionierantrieb beinhaltet zweckmäßigerweise drei oder vier Hallsensoren und dementsprechend drei oder vier dauermagnetische Markierungen.

Wird der erfindungsgemäße Positionierantrieb beispielsweise für ein Schiebedach verwendet, kann er je nach Schätzung des zugehörigen Betätigungskonzeptes durch den Anwender mit einem oder zwei Betätigungsschaltern, die jeweils zwei Schaltpositionen aufweisen, realisiert werden.

### Zeichnung

Die Erfindung ist anhand mehrerer in der Zeichnung dargestellter Ausführungsbeispiele in der nachfolgenden Beschreibung näher erläutert. Es zeigen:
- Fig. 1: schematisch in Draufsicht ein erstes Ausführungsbeispiel des erfindungsgemäß gestalteten Schaltrades in Form einer mit Nuten versehenen Sinterscheibe;
- Fig. 2: schematisch in Seitenansicht das in Fig. 1 dargestellte erfindungsgemäße Schaltrad;
- Fig. 3: schematisch in Seitenansicht ein zweites Ausführungsbeispiel des erfindungsgemäß gestalteten Schaltrades in Form eines Ringmagneten mit aufgesetzten Schaltblechen und dazwischen angeordneten Hallsensoren;
- Fig. 4: schematisch in Seitenansicht ein Schaltblech;
- Fig. 5: schematisch in Draufsicht das Schaltblech gemäß Fig. 4 und zusätzlich darunterliegend gestrichelt angedeutet der Ringmagnet;
- Fig. 6: schematisch ein Schaltdiagramm und die zugehörige einschrittige Codierung für verschiedene Zustände und Positionen eines Antriebs für ein Schiebedach mit einem Schaltrad, welches mit vier Hallsensoren und entsprechenden magnetischen Markierungen arbeitet und universell einsetzbar ist;
- Fig. 7: schematisch ein Blockschaltbild eines Positionierantriebs für ein Schiebedach, wobei drei Hallsensoren vorgesehen sind und ein Betätigungskonzept mit zwei Schaltern mit jeweils zwei Betätigungspositionen angewandt wird, und
- Fig. 8: schematisch ein Blockschaltbild eines Positionierantriebs für ein Schiebedach, wobei vier Hallsensoren vorgesehen sind und ein Betätigungskonzept mit einem Schalter und zwei Betätigungspositionen angewandt wird.

### Beschreibung der Ausführungsbeispiele

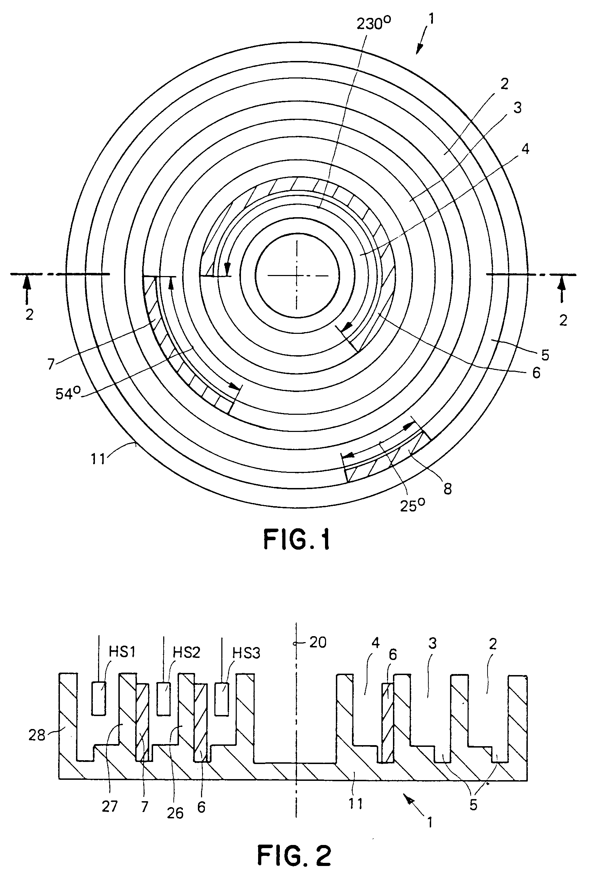

Ein erstes Ausführungsbeispiel des erfindungsgemäß gestalteten Schaltrades 1 ist in den Fig. 1 und 2 dargestellt. In dieser Ausführung besteht das Schaltrad 1 aus einer Scheibe 11, die mit konzentrischen Nuten 2, 3, 4 versehen ist. In diesen Nuten, die vorzugsweise jeweils mit einer Abstufung 5 versehen ist, sind dauermagnetische Markierungen 6, 7 und 8 angebracht. Die Scheibe 11 ist vorzugsweise aus magnetisch leitendem Material als Sinterscheibe ausgeführt. Die dauermagnetischen Markierungen 6, 7 und 8 sind von verschiedener Winkellänge, je nach erforderlicher Signallänge. So ist die dauermagnetische Markierung 6 im dargestellten Beispiel 230° lang, die Markierung 7 beträgt 54° und die dritte dauermagnetische Markierung 8 weist eine Länge von 25° auf. Darüber hinaus sind die dauermagnetischen Markierungen auf verschiedenen Radien der Sinterscheibe 11 bzw. des Schaltrades 1 angeordnet und weiterhin in verschiedenen Winkelpositionen zueinander positioniert, um verschiedene Signalanfänge bzw. -enden zu ermöglichen.

Wie in der Fig. 2, die eine Seitenansicht bzw. ein Schnittbild entlang der Linie 2-2 von Fig. 1 zeigt, dargestellt, sind oberhalb von zahnartigen Stegen 26, 27 und 28 jeweils ein Hallsensor HS3, HS2 und HS1 angeordnet. Diese Hallsensoren HS1 bis HS3 erzeugen Signale entsprechend den vorhandenen dauermagnetischen Markierungen 6, 7 und 8, d. h. sie nehmen bei Vorhandensein eines magnetischen Feldes einen bestimmten Signalzustand ein und bei Nichtvorhandensein des magnetischen Feldes den zweiten bestimmten Signalzustand ein. Auf diese Weise geben die Hallsensoren Ausgangssignale ab, die sich in Abhängigkeit von der Stellung des Schaltrades 1 gegenüber einer Referenzposition bei Verdrehen um die Achse 20 ändern.

Die von den Hallsensoren HS erzeugten Signale werden zusammen mit von außen zugeführten Betätigungssignalen in einer Elektronik zu Steuersignalen für den Motor des erfindungsgemäßen Positionsantriebs verarbeitet. Der nicht dargestellte Motor verdreht das Schaltrad 1 auf seinem Positionierungsweg. Dazu kann das Schaltrad über ein Getriebe vom Motor angetrieben werden. In der Zeichnung sind die entsprechenden konstruktiven Einzelheiten nicht näher dargestellt. Es sei nur darauf hingewiesen, daß die Sinterscheibe 11 beispielsweise mit einem Zahnkranz am Außenumfang versehen sein kann, über den mittels eines Getrieberitzels der Motor das Schaltrad 1 um die Achse 20 verdreht.

Die in Fig. 1 und 2 dargestellten dauermagnetischen Markierungen 6 - 8 bestehen in bevorzugter Ausführung aus Plastoferritstreifen, die flexibel sind und an die Wandungen der Nuten 2 - 4 geklebt sind. Insbesondere werden im Hinblick auf eine für eindeutiges Schalten günstige Magnetfeldverhältnisse die Plastoferritstreifen in den Abstufungen 5 an die Wandungen der zahnartigen Stege 26 - 28 angeklebt. Damit ist kostengünstig ein näherungsweise homogenes magnetisches Feld ausreichender Amplitude zu erzielen, ohne daß Hystereseprobleme beim Schalten oder Positionierungsprobleme der Hallsensoren auftreten. Die Länge und die Lage der Plastoferritstreifen richtet sich nach dem gewünschten Positionierungsprofil, z. B. nach dem gewünschten Drehwinkel für Hebe- und Schiebebereich des Schiebedaches. Das Schaltrad 1 kann demgemäß auf einfache Weise für verschiedene Schiebedach-Motortypen verwendet werden. Lediglich durch in Länge und winkelmäßig anderer Positionierung angepaßter Plastoferritstreifen sind andere Erfordernisse zu erfüllen.

Bei dem in Fig. 1 und 2 dargestellten Schaltrad 1 wird in Anwendung für einen Schiebedachantrieb der Bereich 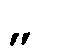 Schieben" durch die innerste dauermagnetische Markierung 6 über einen Winkel von 230° markiert. Der dafür in der innersten Nut 4 verwendete Plastoferritstreifen verbraucht bei Anordnung an dieser Stelle am wenigsten Material, weil er hier am kürzesten ist. Für den Bereich 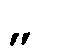 Heben" wird ein Plastoferritstreifen von 54° in der mittleren Nut 3 verwendet. Ein kurzer Plastoferritstreifen von 25° markiert in der äußersten Nut 2 das Ende des Schiebebereichs. Um mit dem dauermagnetischen Material generell rationell umzugehen, werden zweckmäßigerweise die großen Winkelbereiche in die inneren Nuten mit den kleineren Radien und dem damit geringeren Umfang eingeklebt.

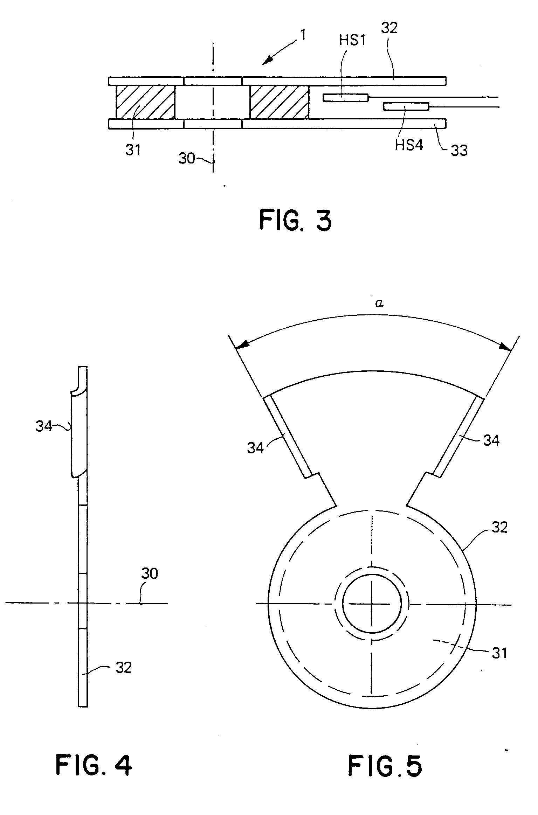

In den Fig. 3 - 5 ist eine zweite besonders zweckmäßige Ausführungsform des erfindungsgemäß gestalteten Schaltrades 1 dargestellt. Dabei wird das Magnetfeld für die dauermagnetischen Markierungen, die die Hallsensoren schalten, von einem ringförmigen Dauermagneten 31 aufgebracht wird. Die dauermagnetischen Markierungen selbst werden durch magnetisch leitende Teile, insbesondere Schaltbleche 32 und 33 wie in Fig. 3 dargestellt, gebildet. Diese in bevorzugter Ausführung gestanzten Blechteile sind in sektoraler und radialer Ausdehnung unterschiedlich groß gestaltet. Somit werden zum einen die Länge der Hallsensor-Signale und zum anderen die Lage der entsprechend zugeordneten Hallsensoren, z.B. HS1 und HS4 in radialer Staffelung beeinflußt und berücksichtigt. Wie in der Seitenansicht von Fig. 4 und der Draufsicht von Fig. 5 anhand des Schaltbleches 32 dargestellt, sind die Schaltbleche zur eindeutigen Feldführung mit abgekröpften Enden 34 versehen. In Fig. 5 ist zur Verdeutlichung in gestrichelter Darstellung der Ringmagnet 31 gezeigt. Er liefert die magnetische Feldstärke, die als magnetische Markierung im Winkelbereich α zwischen den beiden abgekröpften Enden 34 auf einen darunterliegenden Hallsensor wirksam ist. Wie in Fig. 3 dargestellt, sind die Hallsensoren, beispielsweise HS1 und HS4 wie in Fig. 3, außerhalb des vom Ringmagneten 31 eingenommenen Radius angeordnet, und falls erforderlich radial gestaffelt. Wie weiterhin dargestellt, sind die Hallsensoren HS1 und HS4 vorzugsweise zwischen die feldleitenden Schaltbleche 32 und 33 eingebettet. Damit ist ein guter magnetischer Rückschluß gegeben. Gemäß dem gewünschten Positionierungsprofil des Antriebs, können einzelne und/oder mehrere Schaltbleche entsprechend gestaltet und mit dem Ringmagneten 31 zu dem um die Achse 30 verdrehbaren Schaltrad 1 verbunden werden.

Das in den Fig. 1 und 2 dargestellte Schaltrad 1 ist mit drei dauermagnetischen Markierungen und drei diesen zugeordneten Hallsensoren ausgestattet. Es ist auch möglich und besonders zweckmäßig, ein Schaltrad mit vier dauermagnetischen Markierungen und demnach dann vier zugeordneten Hallsensoren HS1 - HS4 in der gleichen Weise aufzubauen. Der dabei erzielte Vorteil besteht darin, daß man ein Universalschaltrad erhält, welches an jedes Schiebedach angepaßt werden kann. Zu dieser Anpassung werden die Länge der Bereiche durch einfache Verdrehung bzw. Verschiebung der Plastoferritstreifen oder der Hallsensoren gegeneinander an das jeweilige Positionierungsprofil des zugehörigen Antriebs verstellt.

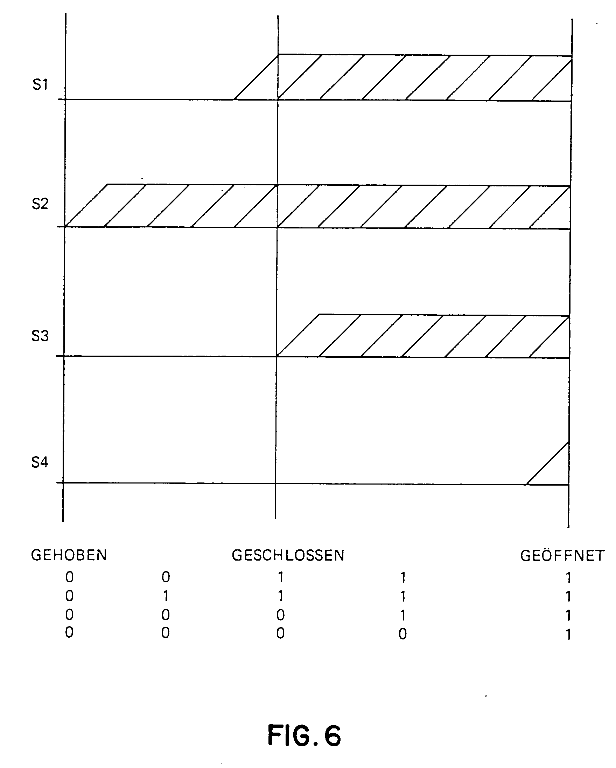

In der Fig. 6 sind schematisch in einem Schaltdiagramm die Signale S1 - S4 eines solchen universell verwendbaren Schaltrades dargestellt, zusammen mit der Codierung. Diese Codierung ist einschrittig für die fünf möglichen Schiebedachpositionen 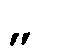 Gehoben-Heben-Geschlossen-Öffnen-Geöffnet" in den vier Zeilen darunter angegeben.

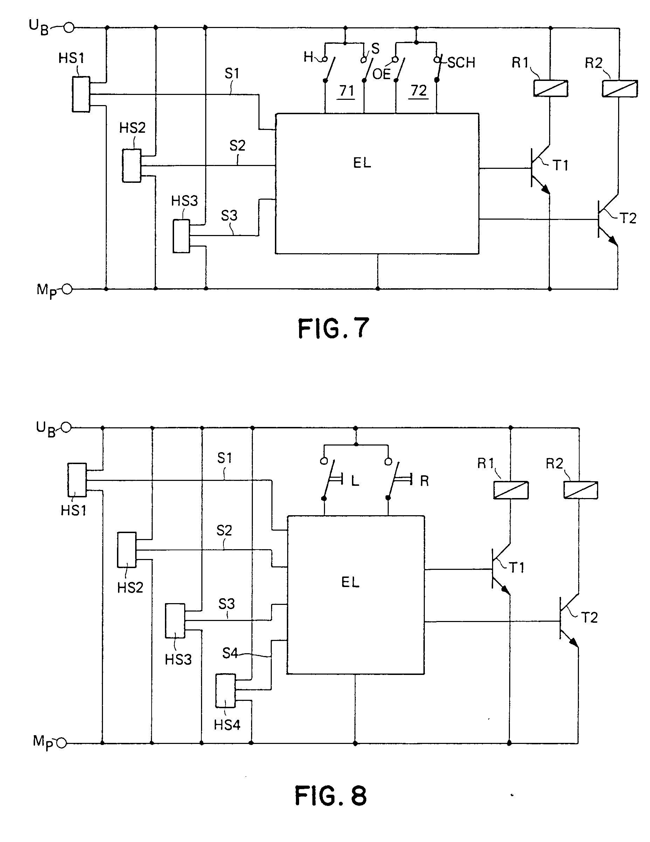

In der Fig. 7 ist schematisch ein Blockschaltbild eines Positionsantriebs für ein Schiebedach dargestellt, bei dem das Betätigungskonzept mit zwei Schaltern und jeweils zwei Betätigungspositionen verwirklicht ist. Das dabei verwendete Schaltrad weist drei dauermagnetische Markierungen und dementsprechend drei Hallsensoren HS1, HS2 und HS3 auf, die mit ihren Versorgungsanschlüssen zwischen der Versorgungsspannung U_{B} und dem Massepotential Mp liegen. Die Signalausgänge S1, S2 und S3 werden als Eingänge einer Elektronik- und Logikschaltung EL zugeführt. Weitere Eingangssignale erhält die Elektronik EL von zwei Betätigungsschaltern 71 und 72, die jeweils zwei Betätigungspositionen aufweisen. So ist der Schalter 71 mit den Positionen für Heben H und Senken S versehen und der Schalter 72 mit den Positionen für Öffnen OE und Schließen SCH. Aus diesen Eingangssignalen, nämlich den Hallsensor-Signalen S1 - S3 für die Antriebsposition und den Betätigungssignalen H, S, OE, SCH, werden in der Elektronik EL Motorsteuersignale ST1 und ST2 erzeugt. Das Motorsteuersignal ST1 wird dem Basiseingang eines Transistors T1 und das Motorsteuersignal ST2 wird dem Basiseingang eines zweiten Transistors T2 zugeführt. Wenn diese Transistoren T1 und T2 leitend sind, schalten sie mit ihnen in Reihenschaltung zwischen der Versorgungsspannung U_{B} und dem Massepotential Mp liegende Relais R1 bzw. R2. Diese Relais R1 und R2 ihrerseits liegen im Stromkreis des nicht dargestellten Motors des für ein Schiebedach dienenden Positionierantriebs.

In der Fig. 8 ist schematisch in einem Blockschaltbild ein Positionierantrieb für ein Schiebedach dargestellt, bei dem ein Universalschaltrad mit vier Hallsensoren HS1 - HS4 verwendet und das Betätigungskonzept mit nur einem Betätigungsschalter 81 mit zwei Betätigungspositionen L und R angewandt wird. Die vier Hallsensoren sind mit ihren Versorgungsleitungen an die Versorgungsspannung U_{B} bzw. Massepotential Mp gelegt. Die Signalausgänge S1 - S4 sind Eingänge zu einer Elektronik- und Logikschaltung EL. Dieser Elektronik EL werden als Eingangssignale auch die Signale R bzw. L des Betätigungsschalters 81 zugeführt. Aus den genannten Eingangssignalen werden in der Elektronik EL die Motorsteuersignale ST1 und ST2 zur Steuerung der Transistoren T1 und T2 sowie der Relais R1 und R2 erzeugt, wie dies bereits im Zusammenhang mit Fig. 7 beschrieben wurde.

Bei dem hier angewandten Betätigungskonzept werden die Funktionen Heben/Senken und Öffnen/Schließen mit nur einem Schalter 81 mit zwei Tast- bzw. Betätigungspositionen realisiert. Dazu ist in der Elektronik ein RS-Flipflop (Reset-Set-Flipflop) vorgesehen. Mit dessen Hilfe erfolgt die Abschaltung des Antriebs beim Erreichen der Stellung 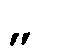 Geschlossen". Das RS-Flipflop wird gesetzt sobald einer der Schiebedachtaster betätigt wird, entweder L oder R des Betätigungsschalters 81, und gibt damit die Relais R1 und R2 zur Ansteuerung frei. Beim Erreichen der Stellung 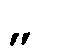 Geschlossen", sowohl aus dem Schiebe- als auch aus dem Hebebereich heraus, wird das Flipflop rückgesetzt. Dadurch wird die Relaisansteuerung gesperrt. Erst nach Loslassen und neuerlichem Betätigen des Tasters kann der Antrieb wieder aktiviert werden.

Die Erfindung bietet mit dem Schaltrad mit dauermagnetischen Markierungen, den ihnen zugeordneten Hallsensoren und der Elektronik einen sehr vorteilhaften und breit einsetzbaren Ersatz für mit mechanischem Nockenschaltrad und Mikroschaltern realisierte Positionierantriebe.

## Patentansprüche

1. Positionierantrieb, insbesondere für Schiebedächer von Kraftfahrzeugen oder dergleichen, enthaltend einen elektrischen Motor, Mittel zur Betätigung (H, S, OE, SCH bzw. L, R) des Motors sowie zur Feststellung (1; HS1-HS4) der Position des Antriebs, wobei
a) ein vom Motor angetriebenes Schaltrad (1) vorgesehen ist, auf dem dauermagnetische Markierungen (6, 7, 8 bzw. 32, 33) aufgebracht sind,
b) Hallsensoren (HS1-HS4) vorgesehen und derart angeordnet sind, daß sie entsprechend den dauermagnetischen Markierungen (6, 7, 8 bzw. 32, 33) Signale (S1-S4) erzeugen, und
c) eine Elektronik (EL) vorgesehen ist, welche die erzeugten Hallsensor-Signale (S1-S4) zusammen mit den Betätigungssignalen (H, S, OE, SCH bzw. L, R) in Motorsteuersignale (ST1, ST2) umsetzt, dadurch gekennzeichnet, daß jeweils eine dauermagnetische Markierung (6, 7, 8 bzw. 32, 33) auf verschiedenen Radien des Schaltrads (1) angeordnet ist und jeder dauermagnetischen Markierung (6, 7, 8 bzw. 32, 33) auf dem Schaltrad (1) ein Hallsensor (HS1-HS4) zugeordnet ist.

2. Positionierantrieb nach Anspruch 1 , dadurch gekennzeichnet, daß die dauermagnetischen Markierungen (6, 7, 8 bzw. 32, 33) unterschiedliche Positionen auf dem Schaltrad (1) einnehmen.

3. Positionierantrieb nach einem der vorigen Ansprüche, dadurch gekennzeichnet, daß die dauermagnetischen Markierungen (6, 7, 8 bzw. 32, 33) mit in Richtung der Betätigung des zugeordneten Hallsensors (HS1 - HS4) gesehen, sich über unterschiedliche Winkelbereiche erstreckenden Ausmaßen (z.B. 230°, 54°, 25°) ausgestattet sind.

4. Positionierantrieb nach einem der vorigen Ansprüche, dadurch gekennzeichnet, daß die Hallsensoren (HS1 - HS4) von dem Feld der sie betätigenden dauermagnetischen Markierungen (6, 7, 8 bzw. 32, 33) auf zwei Seiten eingeschlossen sind.

5. Positionierantrieb nach einem der vorigen Ansprüche, dadurch gekennzeichnet, daß das Schaltrad (1) als Sinterscheibe (11) aus magnetisch leitendem Material ausgeführt ist, in der Scheibe (11) auf verschiedenen Radien Nuten (2, 3, 4) vorzugsweise mit innerer Abstufung (5), vorgesehen sind, und in die Nuten (2, 3, 4) dauermagnetisches Material, vorzugsweise Plastoferritstreifen (6, 7, 8), in verschiedener Länge (230°, 54°, 25°) dauerhaft eingebracht ist.

6. Positionierantrieb nach einem der Ansprüche 1 bis 4, dadurch gekennzeichnet, daß das Schaltrad (1) einen Ringmagneten (31) enthält, die dauermagnetischen Markierungen (6, 7, 8 bzw. 32, 33) durch in radialer und sektoraler Ausdehnung verschieden große magnetisch leitende Teile, vorzugsweise Blechteile (32, 33), die einseitig oder bevorzugt beidseitig des Ringmagneten (31) anbringbar sind, realisiert sind, und die Hallsensoren (HS1 - HS4) außerhalb des vom Ringmagneten (31) eingenommenen Radius angeordnet sind.

7. Positionierantrieb nach einem der vorigen Ansprüche, dadurch gekennzeichnet, daß drei (HS1 - HS3) bzw. vier (HS1 - HS4) Hallsensoren und dementsprechend drei bzw. vier dauermagnetische Markierungen (6, 7, 8 bzw. 32, 33) vorgesehen sind.

8. Positionierantrieb nach einem der vorigen Ansprüche, dadurch gekennzeichnet, daß zur Betätigung des Antriebs ein oder zwei Schalter (81 bzw. 71, 72) mit jeweils zwei Betätigungspositionen (L, R bzw. H, S, OE, SCH) vorgesehen sind.

## Claims

1. Positioning drive, in particular for sliding roofs of motor vehicles or the like, containing an electric motor, means (H, S, OE, SCH and L, R) for activating the motor and means (1; HS1-HS4) for determining the position of the drive,
a) a switch-actuating wheel (1) which is driven by the motor and on which permanent-magnetic marks (6, 7, 8 and 32, 33) are applied being provided,
b) Hall sensors (HS1-HS4) being provided and being arranged in such a way that they produce signals (S1-S4) corresponding to the permanent-magnetic marks (6, 7, 8 and 32, 33), and
c) an electronic system (EL) being provided which converts the generated Hall sensor signals (S1-S4) together with the activation signals (H, S, OE, SCH and L, R) into motor control signals (ST1, ST2), characterized in that in each a permanent-magnetic mark (6, 7, 8 and 32, 33) is arranged on different radii of the switch-actuating wheel (1) and each permanent-magnetic mark (6, 7, 8 and 32, 33) on the switch-actuating wheel (1) is assigned a Hall sensor (HS1-HS4).

2. Positioning drive according to Claim 1, characterized in that the permanent-magnetic marks (6, 7, 8 and 32, 33) assume different positions on the switch-actuating wheel (1).

3. Positioning drive according to one of the preceding claims, characterized in that the permanent-magnetic marks (6, 7, 8 and 32, 33) are equipped with dimensions (for example 230°, 54°, 25°) which extend, viewed in the direction of the activation of the assigned Hall sensors (HS1-HS4), over different angular regions.

4. Positioning drive according to one of the preceding claims, characterized in that the Hall sensors (HS1-HS4) are enclosed on two sides by the field of the permanent-magnetic marks (6, 7, 8 and 32, 33) which activate them.

5. Positioning drive according to one of the preceding claims, characterized in that the switch-actuating wheel (1) is designed as a sintered disc (11) made of magnetically permeable material, grooves (2, 3, 4), preferably with internal steps (5) are provided in the disc (11) at various radii, and permanent-magnetic material, preferably plasto-ferrite strips (6, 7, 8) of different lengths (230°, 54°, 25°) are permanently positioned in the grooves (2, 3, 4).

6. Positioning drive according to one of Claims 1 to 4, characterized in that the switch-actuating wheel (1) contains a ring magnet (31), the permanent-magnetic marks (6, 7, 8 and 32, 33) are implemented by means of magnetically permeable parts which are of different sizes in the radial and sectoral extension, being preferably sheet-metal parts (32, 33) which can be attached on one side or preferably on both sides of the ring magnet (31), and the Hall sensors (HS1-HS4) are arranged outside the radius taken up by the ring magnet (31).

7. Positioning drive according to one of the preceding claims, characterized in that three (HS1-HS3) or four (HS1-HS4) Hall sensors and correspondingly three or four permanent-magnetic marks (6, 7, 8 and 32, 33) are provided.

8. Positioning drive according to one of the preceding claims, characterized in that one or two switches (81 or 71, 72) each with two actuation positions (L, R and H, S, OE, SCH) are provided for activating the drive.

## Revendications

1. Mécanisme d'entraînement de positionnement, en particulier pour toits ouvrants de véhicules à moteur ou analogues, contenant un moteur électrique, des moyens servant à actionner (H, S, OE, SCH ou L, R) le moteur ainsi qu'à déterminer (1; HS1 - HS4) la position du mécanisme d'entraînement, dans lequel
a) il est prévu une roue de commande (1), entraînée par un moteur, sur laquelle sont apposés des repères magnétiques permanents (6, 7, 8 ou 32, 33),
b) il est prévu des détecteurs Hall (HS1 à HS4) qui sont disposés d'une manière telle qu'ils produisent des signaux (S1 à S4), qui correspondent aux repères magnétiques permanents (6, 7, 8 ou 32, 33), et
c) il est prévu un circuit électronique (EL), qui convertit les signaux (S1 à S4), produits par le détecteur Hall en même temps que les signaux d'actionnement (H, S, OE, SCH ou L, R) en signaux de commande du moteur (ST1, ST2),
caractérisé en ce qu'
on dispose respectivement un repère magnétique permanent (6, 7, 8 ou 32, 33) sur différents rayons de la roue de commande (1) et on associe à chaque repère magnétique permanent (6, 7, 8 ou 32, 33) sur la rue de commande (1) un détecteur Hall (HS1 à HS4).

2. Mécanisme d'entraînement de positionnement selon la revendication 1,
caractérisé en ce que
les repères magnétiques permanents (6, 7, 8 ou 32, 33) prennent des positions différentes sur la roue de commande (1).

3. Mécanisme d'entraînement de positionnement selon l'une des revendications précédentes,
caractérisé en ce que
les repères magnétiques permanents (6, 7, 8 ou 32, 33) sont pourvus de dimensions (par exemple 230°, 54°, 25°) qui s'étendent sur différentes zones angulaires , vu dans le sens de l'actionnement du détecteur Hall correspondant (HS1 à HS4).

4. Mécanisme d'entraînement de positionnement selon l'une des revendications précédentes,
caractérisé en ce que
les détecteurs Hall (HS1 à HS4) sont enfermés sur deux côtés par le champ des repères magnétiques permanents (6, 7, 8 ou 32, 33), qui les actionnent.

5. Mécanisme d'entraînement de positionnement selon l'une des revendications précédentes,
caractérisé en ce que
- la roue de commande (1) est réalisée sous la forme d'un disque fritté (11) en une matière magnétiquement conductrice,
- dans le disque (11) il est prévu des rainures (2, 3, 4) sur différents rayons de préférence avec un gradin intérieur (5), et
- dans les rainures (2, 3, 4) on insère de façon permanente une matière magnétique permanente, de préférence des rubans de ferrite plastiques (6, 7, 8) de différentes longueurs (230°, 54°, 25°).

6. Mécanisme d'entraînement de positionnement selon l'une des revendications 1 à 4,
caractérisé en ce que
- la roue de commande (1) contient un aimant annulaire (31),
- les repères magnétiques permanents (6, 7, 8 ou 32, 33) sont réalisés par des pièces magnétiquement conductrices de grandeur différente quant à leur extension radiale et sectorielle, de préférence des pièces en tôle (32, 33), que l'on peut mettre d'un côté ou de préférence des deux côtés de l'aimant annulaire (31), et
- les détecteurs Hall (HS1 à HS4) sont disposés en dehors du rayon occupé par l'aimant annulaire (31).

7. Mécanisme d'entraînement de positionnement selon l'une des revendications précédentes,
caractérisé en ce qu'
on prévoit trois détecteurs Hall (HS1 à HS3) ou quatre détecteurs Hall (HS1 à HS4) et de façon correspondante trois ou quatre repères magnétiques permanents (6, 7, 8 ou 32, 33).

8. Mécanisme d'entraînement de positionnement selon l'une des revendications précédentes,
caractérisé en ce que
pour actionner le mécanisme d'entraînement il est prévu un ou deux interrupteurs (81 ou 71, 72) avec respectivement deux positions d'actionnement (L, R ou H, S, OE, SCH).
